# EUROPEAN PATENT SPECIFICATION

(11) **EP 1 552 921 B1**
(45) Date of publication and mention of the grant of the patent: **04.09.2013**
(21) Application number: 03792630.0
(22) Date of filing: 22.07.2003
(51) Int. Cl.: B32B 27/32

(54) **LAMINATED FILM FOR STRETCH PACKAGING**
MEHRSCHICHTFOLIE FÜR STRECKVERPACKUNG
FILM LAMINE POUR EMBALLAGE SOUS FILM TIRABLE

(30) Priority: 26.08.2002 JP 2002245502
(43) Date of publication of application: 13.07.2005
(73) Proprietor: MITSUBISHI PLASTICS, INC., Chiyoda-ku, Tokyo 100-0005 (JP); IDEMITSU KOSAN CO., LTD., Tokyo 100-8321 (JP)
(72) Inventor: TANIGUCHI, Kouichirou Mitsubishi Plastics, Inc., Nagahama-shi, Shiga 526-8660 (JP); SASAKI, Hideki Mitsubishi Plastics, Inc., Nagahama-shi, Shiga 526-8660 (JP); KIJIMA, Masato, Ichihara-shi, Chiba 299-0107 (JP)
(74) Representative: Gille Hrabal
(86) International application number: PCT/JP2003/009248
(87) International publication number: WO 2004/018203

(56) References cited:
- EP-A1- 1 231 236
- JP-A- 9 154 479
- JP-A- 11 115 122
- JP-A- 2000 044 695
- JP-A- 2000 044 696
- JP-A- 2000 052 510
- JP-A- 2000 272 059
- JP-A- 2000 281 723
- JP-A- 2000 289 158
- JP-A- 2001 138 453
- JP-A- 2002 047 282
- JP-A- 2002 225 206
- DATABASE WPI Week 200006 Derwent Publications Ltd., London, GB; AN 2000-072855 XP002452461 & WO 99/62987 A1 (MITSUBISHI PLASTICS INC) 9 December 1999 (1999-12-09)
- DATABASE WPI Week 200221 Derwent Publications Ltd., London, GB; AN 2002-164170 XP002452462 & WO 01/90227 A1 (IDEMITSU KOSAN CO LTD) 29 November 2001 (2001-11-29) & EP 1 288 249 A1 (IDEMITSU PETROCHEMICAL CO [JP] IDEMITSU KOSAN CO [JP]) 5 March 2003 (2003-03-05)
- DATABASE WPI Week 200065 Derwent Publications Ltd., London, GB; AN 2000-667771 XP002452463 & JP 2000 272059 A (DENKI KAGAKU KOGYO KK) 3 October 2000 (2000-10-03)

## Description

### Technical Field

The present invention relates to a laminated film for stretch wrapping suitable for use in wrapping of foods. More particularly, the invention relates to a laminated film for stretch wrapping which is formed of a material without containing either chlorine or a plasticizer for poly(vinyl chloride).

### Background Art

Conventionally, foods such as fruits and vegetables, meats, and processed foods placed on lightweight tray are over-wrapped with a stretch wrap film, i.e., pre-packaging, made of poly(vinyl chloride)-based material. Such films have been advantageously employed by virtue of excellent qualities recognized by sellers and consumers. That is, the films maintain the qualities of food products by virtue of the characteristics of film: excellent wrapping properties such as favorable wrapping efficiency and beautiful wrapping finish; excellent elastic recovery, i.e., restoration, from deformation of film induced by, for example, pressing with fingers, after completion of wrapping) ; excellent bottom sealing property; resistance to detachment from trays during transportation and display.

However, in recent years, hydrogen chloride gas generated from poly(vinyl chloride)-based film during incineration, elution of a large amount of plasticizers contained in poly(vinyl chloride)-based film, and other problems have become critical issues. Thus, materials replacing poly(vinyl chloride)-based film have been studied extensively, and many types of stretch wrap films employing a material, in particular, polyolefin resin, have been proposed. In addition, in recent years extensive studies have been carried out on stretch wrap film having three layers of two components; i.e., both surface layers mainly containing an ethylene-vinyl acetate copolymer, and an intermediate layer mainly containing a polypropylene resin, from the viewpoint of surface characteristics suitable for stretch film, transparency, appropriate heat resistance, freedom in material design, economic merits.

However, at present, currently proposed stretch films formed mainly from polypropylene resin have unsatisfactory wrapping characteristics (for both automated and manual wrapping) such as wrapping efficiency, wrapping finish, elastic recovery, and bottom sealing property, and the overall evaluation of the stretch films on the market, including economic merits, remains unsatisfactory.

The present inventors previously proposed polyolefin-based stretch wrap film having specific viscoelasticity, the film having at least one layer containing a soft polypropylene resin formed from a controlled stereoregularity based on co-presence of crystalline blocks and amorphous blocks in molecular chains of the resin, and an optional petroleum resin or another polypropylene resin (see, for example, Japanese Patent Application Laid-Open (*kokai*) Nos. 2000-44695 and 2000-44696).

As compared with conventional polyolefin-based stretch wrap films, the films disclosed in Japanese Patent Application Laid-Open (*kokai*) Nos. 2000-44695 and 2000-44696 have excellent characteristics, including wrapping efficiency, wrapping finish, elastic recovery, and bottom sealing property. However, storage stability of feed material pellets (aggregation of feed material pellets during storage, weighing, or transportation) is unsatisfactory, and other properties such as transparency of film and elastic recovery of wrapped film are still inferior to those of poly(vinyl chloride)-based films.

Meanwhile, a wrap film composed of a soft polypropylene resin having a specific stereoregularity and produced in the presence of a metallocene catalyst, and an olefin polymer is disclosed (see, for example, Japanese Patent Application Laid-Open (*kokai*) No. 2002-47383).

The film disclosed in Japanese Patent Application Laid-Open (*kokai*) No. 2002-47383 exhibits relatively favorable stretch wrap film characteristics in terms of, for example, transparency and elastic recovery. However, since restoration behavior of the film being stretched is instantaneous, when wrapping is carried out by the use of an automatic wrapping machine, the stretched film happens to be undesirably restored during a very short period of folding the film under the bottom of a tray. Thus, the insufficiently stretched film tends to generate wrinkles and have a poor cut property.

### Disclosure of the Invention

An object of the present invention is to provide a chlorine-free stretch film which is excellent in terms of storage stability of feed material pellets, wrapping efficiency, wrapping finish, elastic recovery, bottom sealing property, transparency, and has favorable long-term stability and economic merits.

The present inventors have carried out extensive studies so as to attain the aforementioned object, and have found that a laminated film comprising at least three layers including an intermediate layer formed of a resin layer containing a specific polypropylene resin having controlled stereoregularity, a crystalline polypropylene resin, and a petroleum resin, and two surface layers containing, as a main component, an ethylene polymer successfully provides a chlorine-free stretch film which has excellent characteristics such as wrapping efficiency, wrapping finish, elastic recovery, bottom sealing property, and transparency, and has favorable long-term stability and economic merits as well. The present invention has been accomplished on the basis of this finding.

Accordingly, the present invention provides a laminated film for stretch wrapping which comprises at least three layers, characterized in that the laminated film has both surface layers comprising, as a main component, component (A) which is an ethylene polymer, and has at least one intermediate layer formed of a mixed resin layer comprising, as a main component, a resin composition containing the following component (B) in an amount of 30 to 75 % by weight: a polypropylene resin having controlled stereoregularity satisfying the following requirements (1) and (2):
(1) a meso pentad fraction [mmmm] as determined from a ¹³C-NMR spectrum is 0.2 to 0.7, and
(2) a racemic pentad fraction [rrrr] and (1-mmmm) satisfy the following relation:
   [rrrr/(1-mmmm)]≤ 0.1;
   the following component (C) in an amount of 20 to 60 % by weight:
   a crystalline polypropylene resin having a crystal melting peak temperature of 120°C or higher; and
   the following component (D) in an amount of 5 to 30 % by weight:
      at least one resin selected from among petroleum resin, terpene resin, coumarone-indene resin, rosin resin, and hydrogenated derivatives thereof.

The term "main component" in this description is defined as the component occupying in excess of 50 % by weight.

### Best Modes for Carrying Out the Invention

The present invention will next be described in detail. The laminated film for stretch wrapping of the present invention has at least three layers including two surface layers and at least one intermediate layer.

Examples of the ethylene polymer (A) serving as a main component of the aforementioned surface layers include low-density polyethylene, linear low-density polyethylene, linear ultra-low-density polyethylene, medium-density polyethylene, high-density polyethylene, and copolymers formed from ethylene serving as a main component. Specific examples of the copolymers include a copolymer or a polygeneric copolymer of ethylene and one or more comonomers and a mixture composition thereof. Examples of the comonomers include C3 to C10 α-olefins such as propylene, butene-1, pentene-1, hexene-1, 4-methylpentene-1, heptene-1, and octene-1; vinyl esters such as vinyl acetate, and vinyl propionate; unsaturated carboxylate esters such as methyl acrylate, ethyl acrylate, methyl methacrylate, and ethyl methacrylate; ionomers thereof; and unsaturated compounds such as conjugated dienes and non-conjugated dienes. The ethylene polymer generally has ethylene unit content greater than 50 % by weight. As used herein to modify the comonomer, the notation "Cx to Cy", wherein x and y are each integers, means that the comonomer contains from x carbon atoms to y carbon atoms per comonomer.

Among the above ethylene polymers (A), preferred is at least one ethylene polymer selected from among low-density polyethylene, linear low-density polyethylene, linear ultra-low-density polyethylene, ethylene-vinyl acetate copolymer, ethylene-acrylate ester copolymer, and ethylene-methacrylate ester copolymer. Examples of the acrylate ester include methyl acrylate and ethyl acrylate, and examples of the methacrylate ester include methyl methacrylate and ethyl methacrylate.

Among the aforementioned ethylene polymers (A), an ethylene-vinyl acetate copolymer which has a vinyl acetate unit content of 5 to 25 % by weight and a melt flow rate (JIS K 7210, 190°C, under a load of 21.18 N) of 0.2 to 10 g/10 minutes is most preferred.

When the vinyl acetate unit content is less than 5 % by weight, the produced film may have high hardness and reduced flexibility and elastic recovery. In this case, surface tackiness is difficult to reveal. When the vinyl acetate content is in excess of 25 % by weight, the film has excessive surface tackiness, and unwinding characteristic and appearance of the film tend to be impaired. When the melt flow rate is less than 0.2 g/10 minutes, extruding ability may be reduced, whereas when the melt flow rate is in excess of 10 g/10 minutes, reliable film formation cannot be performed, and unevenness in film thickness, decrease and fluctuation in mechanical strength, and similar phenomena are prone to occur, which are not preferred.

No particular limitation is imposed on the method for producing the aforementioned ethylene polymers (A), and any known polymerization methods employing a known olefin polymerization catalyst may be employed. Examples of the polymerization method include slurry polymerization, solution polymerization, bulk polymerization, gas phase polymerization which employ a multi-site catalyst represented by Ziegler-Natta catalyst or a single-site catalyst represented by a metallocene catalyst, and bulk polymerization employing a radical initiator.

To the aforementioned ethylene polymers (A) forming the surface layers, additives such as an anti-oxidant, an anti-clouding agent, an antistatic agent, a lubricant, and a nucleating agent may be added in accordance with needs.

The intermediate layer of the laminated film of the present invention, which is composed of at least one intermediate layer provided between the two surface layers, is formed of a mixed resin layer comprising, as a main component, a resin composition containing the following component (B), component (C), and component (D):
component (B): a polypropylene resin having controlled stereoregularity satisfying the following requirements (1) and (2):
   (1) a meso pentad fraction [mmmm] as determined from a ¹³C-NMR spectrum is 0.2 to 0.7, and
   (2) a racemic pentad fraction [rrrr] and (1-mmmm) satisfy the following relation:
      [rrrr/(1-mmmm)]≤ 0.1;
component (C): a crystalline polypropylene resin having a crystal melting peak temperature of 120°C or higher; and
component (D): at least one resin selected from among petroleum resin, terpene resin, coumarone-indene resin, rosin resin, and hydrogenated derivatives thereof.

No particular limitation is imposed on the polypropylene resin having controlled stereoregularity serving as component (B), so long as the resin satisfies the aforementioned requirements. The meso pentad fraction [mmmm] is preferably 0.3 to 0.6. The ratio of the racemic pentad fraction [rrrr] to (1-mmmm) is preferably [rrrr/(1-mmmm)]≤ 0.08, more preferably [rrrr/(1-mmmm)]≤ 0.06, particularly preferably [rrrr/(1-mmmm)] ≤ 0.05.

When the meso pentad fraction [mmmm] of the polypropylene resin having controlled stereoregularity serving as component (B) is (1) in excess of 0.7, flexibility is reduced. Thus, a film formed from the composition is difficult to satisfy characteristics required for serving as a stretch wrap film such as wrapping efficiency, wrapping finish, elastic recovery, and bottom sealing property. When the meso pentad fraction [mmmm] is (1) less than 0.2, crystallinity is excessively lowered, thereby readily forming aggregation of feed material pellets and lowering film forming-ability. When the ratio of the racemic pentad fraction [rrrr] to (1-mmmm), [rrrr/(1-mmmm)] is (2) in excess of 0.1, feed material pellets may become sticky and may be aggregated during storage.

The meso pentad fraction [mmmm], which characterizes the polypropylene resin having controlled stereoregularity serving as component (B) employed in the present invention, refers to a meso fraction in terms of pentad unit contained in a polypropylene molecule chain, the meso fraction being determined from signals attributed to a methyl group in a ¹³C-NMR spectrum in accordance with a method proposed by A. Zambelli et al. (Macromolecules, 6, 925(1973)). The greater the meso pentad fraction, the higher the stereoregularity of the polypropylene resin.

Similarly, the racemic pentad fraction [rrrr] refers to a racemic fraction in terms of pentad unit contained in a polypropylene molecule chain. The ratio [rrrr/(1-mmmm)] is obtained from the aforementioned pentad-unit-basis meso fraction and racemic fraction, and serves as an index for showing uniformity in stereoregularity distribution of the propylene polymer. The greater the ratio, the wider the distribution profile of stereoregularity. In this case, similar to the case where conventional polypropylene is produced in the presence of a known catalyst system, a mixture of high-stereoregularity polypropylene (PP) and amorphous polypropylene (APP) is produced. As a result, film forming-ability is lowered due to increase in stickiness, and the resultant film exhibit poor transparency.

No particular limitation is imposed on the polypropylene resin having controlled stereoregularity serving as component (B) employed in the present invention, so long as the resin satisfies the aforementioned specific requirements (1) and (2). The polypropylene resin may be a copolymer with a comonomer (2 % by weight or less) other than propylene. Examples of the comonomer include ethylene, 1-butene, 1-pentene, 4-methyl-pentene-1, 1-hexene, 1-octene, 1-decene, 1-dodecene, 1-tetradecene, 1-hexadecene, 1-octadecene, and 1-eicosene. The propylene polymer may be a copolymer obtained through copolymerization of propylene with one or more these comonomers.

The aforementioned polypropylene resin having controlled stereoregularity may be used singly or in combination of two or more species. Generally, such polypropylene resins having a melt flow rate (MFR) (JIS K 7210, 230°C, under a load of 21.18 N) of 0.4 to 20 g/10 minutes, preferably 0.5 to 10 g/10 minutes are employed.

No particular limitation is imposed on the method for producing the polypropylene resin having controlled stereoregularity serving as component (B) employed in the present invention, and any method may be employed so long as the aforementioned requirements (1) and (2) are satisfied. For example, the polypropylene resin is produced preferably through a known method (see WO 99/67303) including (co)polymerization of propylene in the presence of a metallocene catalyst formed from a transition metal compound having a cross-linking structure by the mediation of two cross-linking groups and, in combination, a cocatalyst.

The crystalline polypropylene resin serving as component (C) has a crystal melting peak temperature of 120°C or higher, preferably 130°C to 165°C. When ethylene polymer (A) is employed as a main component in both surface layers and the crystalline polypropylene resin having a crystal melting peak temperature of 120°C or higher is incorporated into the intermediate layer, the heat sealing temperature range can be sifted to higher temperature. When the crystal melting peak temperature is lower than 120°C, the heat sealing temperature range becomes narrower, resulting in difficulty in reliable and sufficient heat sealing. The crystal melting peak temperature of the entire intermediate layer, as determined by the use of a differential scanning colorimeter, is preferably higher than that of the surface layers, by 20°C or more, more preferably 30°C or more, particularly preferably 50°C or more. When the difference in crystal melting peak temperature between the surface layers and the intermediate layer is less than 20°C, heat sealing temperature range becomes narrow, failing to attain heat employable heat sealing characteristics and readily forming holes in the film during heat sealing.

Examples of the crystalline polypropylene resin having a crystal melting peak temperature of 120°C or higher include propylene homopolymer and random copolymers and block copolymers of propylene and another polymerizable monomer. No particular limitation is imposed on the stereostructure of these propylene resins, and propylene polymers of isotactic structure, atactic structure, syndiotactic structure, or mixed structure thereof may be employed. Examples of the copolymerizable monomer include C4 to C12 α-olefins such as ethylene, 1-butene, 1-hexene, 4-methylpentene-1, and 1-octene; and dienes such as divinylbenzene, 1,4-cyclohexadiene, dicyclopentadiene, cyclootcadiene, and ethylidenenorbornene. These monomers may be copolymerized two or more species in combination. Among these, ethylene is preferred in the present invention. Examples of random copolymers include propylene-ethylene random copolymer and propylene-ethylene-butene-1 copolymer. Examples of block copolymers include propylene-ethylene block copolymer and reactor-type polypropylene elastomer. Specific examples of commercial products thereof include IDEMITSU TPO (product of Idemitsu Petrochemical Co., Ltd.), P.E.R. (product of Tokuyama Corporation), NEWCON (product of Chisso Corporation), Catalloy (Adsyl, Adflex) (product of Montell SDK Sunrise Ltd.), EXCELLEN EPX (product of Sumitomo Chemical Co., Ltd), and Zelas (product of Mitsubishi Chemical Corporation).

Of these, propylene-ethylene random copolymer and propylene-ethylene-butene-1 copolymer are preferably employed from the viewpoint of transparency, heat resistance, cost, etc., while reactor-type polypropylene elastomer is preferably employed from the viewpoint of improvement of low-temperature characteristics, softness, transparency, etc.

These crystalline polypropylene resins may be used singly or in combination of two or more species. Generally, such polypropylene resins having a melt flow rate (MFR) (JIS K 7210, 230°C, under a load of 21.18 N) of 0.4 to 20 g/10 minutes, preferably 0.5 to 10 g/10 minutes are employed.

Component (D) is at least one resin (hereinafter may be referred to as "petroleum resin") selected from among petroleum resin, terpene resin, coumarone-indene resin, rosin resin, and hydrogenated derivatives thereof. Such component (D) is effectively used for the purpose of further enhancement of wrapping characteristics such as film firmness, cut property, and performance of folding stability of the bottom as well as transparency. Examples of the petroleum resin include alicyclic petroleum resins obtained from cyclopentadiene or its dimer, aromatic petroleum resins obtained from a C9 fraction, and alicyclic-aromatic copolymerized petroleum resin. Examples of the terpene resin include terpene resin and terpene-phenol resin which are derived from β-pinene. Examples of the rosin resin include rosin resins such as gum rosin and wood rosin and esterified rosin resins such as those esterified with glycerin, pentaerythritol, etc. Among the aforementioned petroleum resins, hydrogenated derivatives are preferred from the viewpoint of color tone, thermal stability, and miscibility. Petroleum resins having a variety of softening points are produced mainly depending on the molecular weight thereof. Among them, petroleum resins having a softening point of 100 to 150°C, preferably 110 to 140°C are preferably employed. Specific examples of commercial products thereof include PETROSIN and Hi-rez (products of Mitsui Chemicals, Inc.), Arkon (product of Arakawa Chemical Industries, Ltd.), Clearon (product of YASUHARA CHEMICAL Co., Ltd.), I-MARV (product of Idemitsu Petrochemical Co., Ltd.), and Escorez (product of Tonex Co., Ltd.).

The mixed resin layer serving as an intermediate layer mainly comprises the aforementioned resin composition containing component (B) in an amount of 30 to 75 % by weight (preferably 40 to 65 % by weight), component (C) in an amount of 20 to 60 % by weight (preferably 25 to 50 % by weight), and component (D) in an amount of 5 to 30 % by weight (preferably 10 to 20 % by weight).

When the component (B) content is less than 30 % by weight or the component (C) content is in excess of 60 % by weight, characteristics of the polypropylene resin of the present invention having controlled stereoregularity cannot be fully attained, and elastic recovery and flexibility of the produced film tends to decrease. When the component (B) content is in excess of 75 % by weight or the component (C) content is less than 20 % by weight, the produced film has excessive flexibility (i.e., less firmness) resulting in impaired cut property, poor heat resistance, thereby failing to fully attain practical heat sealability. When the component (D) (petroleum resin) content is in excess of 30 % by weight, mechanical strength and low-temperature characteristics are impaired. In this case, there arise problems such as tearing of the produced film, and bleeding of petroleum resin on a film surface as time elapsed, resulting in adhesion between each other in film roll products. When the component (D) content is less than 5 % by weight, restoration behavior of the produced film against elongation is instantaneous. Thus, the elongated film happens to be undesirably restored during a very short period of folding the film under the bottom of a tray, when wrapping is carried out by the use of an automatic wrapping machine. Therefore, the component (D) (petroleum resin) content is preferably 10 to 20 % by weight.

The laminated film for stretch wrapping of the present invention includes at least three layers: i.e., (H)/(M)/(H), wherein (H) denotes a surface layer and (M) denotes an intermediate layer. The laminated film may have two or more intermediate layers in accordance with, for example, uses and purposes. For example, the laminated film may have a layer structure (H)/(M1)/(M2)/(H).

Preferably, the entirety of the laminated film for stretch wrapping of the present invention has a storage modulus (E') of 5.0 x 10⁷ Pa to 5.0 x 10⁸ Pa as determined through dynamic viscoelasticity measurement with the frequency of 10 Hz and at the temperature of 20°C, and has a loss tangent (tanδ) within a range of 0.2 to 0.8.

The loss tangent (tanδ) is a ratio of loss modulus (E'') to storage modulus (E'); i.e., tanδ = E''/E'. When a film is present within a temperature range where loss tangent is large, loss modulus (E'') of the material (i.e., viscosity-related property) is significant among viscoelasticity. Therefore, stress relaxation or similar phenomena of the stretch film during wrapping steps (e.g., manual wrapping and wrapping by the use of an automated machine) can be evaluated through employment, as reliable indices, of tanδ values and a temperature range where tanδ is large.

When the storage modulus (E') is less than 5.0 x 10⁷ Pa, the film has excessive flexibility that induces small stress against deformation, resulting in unfavorable operability, poor powerfulness of the film of packaged products. Such a film is not suited for stretch film. On the contrary, when the storage modulus (E') is in excess of 5.0 x 10⁸ Pa, the film is less stretchable due to high hardness, resulting in deformation or rupture of trays. Therefore, E' preferably falls within a range of 8.0 x 10⁷ Pa to 3.0 x 10⁸ Pa. When tanδ is less than 0.2, restoration behavior of the produced film is instantaneous. Thus, the elongated film happens to be undesirably restored during a very short period of folding the film under the bottom of a tray resulting in poor powerfulness of the film and in generation of wrinkles. In addition, thermal melt adhesion of the film during stretch wrapping cannot be sufficiently performed, leading to poor heat-seal conditions of the bottom of trays; i.e., the film at the bottom of packaged products is readily detached during the course of transportation and display. Further, when tanδ is in excess of 0.8, the film exhibits elastic deformation, although good wrapping finish is attained. Thus, the film of packaged products has weak tension against outer force, and the film on the upper side of trays is readily slackened through stacking of the packaged products during transportation and display, leading to decrease in quality of the products. In the case of automated wrapping, such film readily causes problems such as chuck failure, since the film is well elongated in the machine direction. The tanδ falls particularly preferably within a range of 0.30 to 0.60.

In addition to the intermediate layer, another layer (S layer); e.g., a recycle resin layer, as well as another thermoplastic layer; e.g., a polyamide resin layer, an ethylene-vinyl alcohol copolymer layer, or a polyester layer, for imparting the film with gas barrier property may be inserted between surface layers to form a laminated film, so long as the object of the present invention is not impaired. Furthermore, in order to enhance interlayer adhesion, an adhesive or an adhesive resin layer may also be inserted between the layers to form a laminated film.

When the film for stretch wrapping of the present invention has a layer structure including two or more (H) layers, (M) layers, (S) layers, and other layers, in each layer species, the resin composition and other properties may be different from layer to layer or common to all the layers.

The film of the present invention generally has a thickness falling within a range which is generally employed with respect to film for stretch wrapping; i.e., about 8 to 30 µm, typically 10 to 20 µm. The ratio of the thickness of the aforementioned mixed resin layer included in the laminated film of the present invention to the total laminated film thickness is generally 0.2 to 0.9, preferably 0.3 to 0.8. Specifically, the mixed resin layer preferably has a thickness of 5 to 20 µm from the viewpoint of cost and characteristics required for stretch wrap film.

The film of the present invention may be produced through melt extrusion of material by the use of an extruder and film formation (i.e., inflation molding or T-die molding). The laminated film is advantageously formed through co-extrusion by means of a plurality of extruders with multilayer dies. From a practical viewpoint, a resin material is preferably inflation-molded through melt-extruding via ring dies. The blow-up ratio (bubble diameter/die diameter) is preferably 4 or more, particularly preferably 5 to 7. The molded film may be cooled outside the tube or outside and inside the tube. The thus-formed film may be heated at a temperature equal to or lower than the crystallization temperature of the resin and stretched about 1.2 to 5 folds in the machine direction of the film or biaxially stretched about 1.2 to 5 folds in the machine and transverse direction of the film on the basis of the difference in stretch speed between nip rollers. Through the aforementioned treatments, the film can be imparted with improved cut property and heat shrinking property.

To the surface layers and/or mixed resin layer of the film of the present invention, a recycle resin obtained from trimming wastes or other sources or the following additives for imparting the film with properties such as anti-clouding, antistatic, lubricating, and self-adhesion properties may be appropriately incorporated, without deviating from the scope of the present invention.

Examples of the additives include aliphatic alcohol fatty acid esters obtained as a compound of a C1 to C12, preferably C1 to C6 aliphatic alcohol and a C10 to C22, preferably C12 to C18 fatty acid, polyalkylene ether polyols, and paraffin oils. Specific examples of the esters include monoglycerin oleate, polyglycerin oleate, glycerin triricinoleate, glycerin acetylricinoleate, polyglycerin stearate, polyglycerin laurate, methyl acetylricinoleate, ethyl acetylricinoleate, butyl acetylricinoleate, propylene glycol oleate, propylene glycol laurate, pentaerythritol oleate, polyethylene glycol oleate, polypropylene glycol oleate, sorbitan oleate, sorbitan laurate, polyethylene glycol sorbitan oleate, and polyethylene glycol sorbitan laurate. Examples of the ether polyols include polyethylene glycol and polypropylene glycol. At least one species of these compounds is preferably added in an amount of 0.1 to 12 parts by weight, more preferably 1 to 8 parts by weight, to 100 parts by weight of a resin component forming each layer.

### Examples

The present invention will next be described in more detail by way of examples, which should not be construed as limiting the invention thereto. Determination of physical properties and evaluation of the films and the materials for forming the films described in the specification were carried out through the following methods. In the specification, the direction of film extrusion from an extruder is referred to as the "machine direction," and the direction normal to the machine direction is referred to as the "transverse direction."

### (1) Meso pentad fraction [mmmm] and racemic pentad fraction [rrrr]

The fractions were determined by the use of JNM-GSX-270 (product of JEOL Ltd., ¹³C-nuclear magnetic resonance frequency: 67.8 MHz) under the following conditions.
Mode: ¹H complete decoupling
Pulse width: 8.6 µseconds
Pulse interval: 30 seconds
Integration: 7,200 times
Solvent: a mixed solvent of o-dichlorobenzene/di-benzene
(80/20 % by volume)
Sample concentration: 100 mg/1 milliliter solvent
Measurement temperature: 130°C

The pentad fraction of each sample was determined through measurement of split peaks attributed to a methyl group as measured in ¹³C-NMR spectrum. Signals in a peak attributed to a methyl group were assigned through a method disclosed in "Macromolecules 8,687, (1975)" by A. Zambelli *et al.*

### (2) Crystal melting peak temperature (Tm) of component (C)

Tm was determined by the use of DSC-7 (product of Perkin-Elmer Co., Ltd.) in accordance with JIS K 7172. The method of determining Tm of component (B) will be described in the section "Production Example 1" below.

### (3) Stress at 25% elongation

Strip samples (120 mm (machine direction) x 20 mm (transverse direction)) were cut out from each film, and stress (MPa) at 25% elongation of each sample was determined under stretching at a tensile rate of 200 mm/minute and a chuck distance of 40 mm.

### (4) Storage modulus (E') and loss tangent (tanδ)

Storage modulus and loss tangent of each film were determined in the transverse direction by the use of a viscoelastic-meter DVA-200 (product of ITK Corp. Ltd.) under the following conditions: oscillation frequency of 10 Hz, temperature elevation rate of 3°C/minute, and measurement range of from -50°C to 150°C. The thus-obtained data were reduced to values at 20°C.

### (5) Storage stability of feed material pellets

A feed material stored in a stock tank was suctioned by means of a blower through a hosepipe (inner diameter: 50 mm) equipped with a metal nozzle. Transfer failures of the material occurring during transfer to a measuring apparatus were evaluated on the basis of the following ratings:
AA...No problem
BB···Slightly unstable air transfer
CC···Blocking to impair transfer and measurement
DD···Completely solidified eventually.

### (6) Wrapping machine adaptability

A tray made of foamed polystyrene (length: 200 mm, width: 150 mm, depth: 30 mm) was wrapped with a stretch film sample (width 350 mm) by the use of an automated wrapping machine (WminZERO1, product of ISHIDA). The wrapped tray was evaluated in terms of the properties shown in Table 2.

### (7) Elastic recovery

The tray made of foamed polystyrene (length: 200 mm, width 150 mm, depth: 30 mm) employed in "(6) Wrapping machine adaptability" was wrapped in a manner similar to that of the foregoing term (6). The center of the wrap film covering the tray was indented by the use of a rod (diameter: 10 mm) having a hemispherical tip, at an indenting speed of 200 mm/minute, after which the rod was pulled away at the same speed. Indentation remaining one minute after the rod was pulled up was measured while the indentation depth was varied. The maximum indent depth at which an indentation was completely restored was derived, and evaluated on the basis of the following ratings:
(AA) > 25 mm, 25 mm) ≥ (BB) ≥ 20 mm, 20 mm > (CC) ≥ 15 mm,
and 15 mm > (DD).

### (8) Transparency (Haze)

Haze of each film sample obtained was determined in accordance with ASTM D1003 by the use of a haze meter, and the haze value was evaluated on the basis of the following ratings:
(AA) < 1.5%; 1.5% ≤ (BB) < 2.0%; 2.0% ≤ (CC) < 2.5%; and 2.5% ≤ (DD).

### (9) High-temperature storage stability of film

A roll of each produced film was stored in a thermostatic room (50°C and RH of 60%) for 20 days, and unwinding characteristic was evaluated on the basis of the following ratings:
AA···No problem
BB···No problem in practice, but slightly heavy unwinding
CC···Heavy unwinding, problematic in practice
DD···Unwinding was impossible.

### Production Example 1

### (1) Preparation of catalyst and production of low-crystalline polypropylene

### Synthesis of complex

### Synthesis of (1,2'-dimethylsilylene)(2,1'-dimethylsilylene)-bis(3-trimethylsilylmethylindenyl)zirconium dichloride

(1,2'-Dimethylsilylene)(2,1'-dimethylsilylene)-bis(indene) lithium salt (3.0 g, 6.97 mmol) placed in a Schlenk flask was dissolved in tetrahydrofuran (THF) (50 milliliter), and the solution was cooled down to -78°C. Iodomethyltrimethylsilane (2.1 milliliter, 14.2 mmol) was gradually added dropwise to the above solution, and the mixture was stirred at room temperature for 12 hours. The solvent was removed, and ether (50 milliliter) was added to the solvent-removed mixture. The thus-formed liquid was washed with a saturated ammonium chloride solution. The organic phase was separated, and dried, followed by removing the solvent, to thereby yield 3.04 g (5.88 mmol) of (1,2'-dimethylsilylene)(2,1'-dimethylsilylene)-bis(3-trimethylsilylmethylindene) (yield: 84%).

Subsequently, the above-produced (1,2'-dimethylsilylene)(2,1'-dimethylsilylene)-bis(3-trimethylsilylmethylindene) (3.04 g (5.88 mmol)) and ether (50 milliliter) were placed in a Schlenk flask under nitrogen, and the mixture was cooled down to -78°C. n-BuLi (1.54 mol/liter hexane solution) (7.6 milliliter, 11.7 mmol) was added thereto, and the mixture was stirred at room temperature for 12 hours. The solvent was removed, and the formed solid was washed with hexane (40 milliliter), thereby yielding 3.06 g (5.07 mmol) of ether adduct of the target lithium salt (yield: 73%). The measurement results in accordance with ¹H-NMR (90 MHz, THF-d₈) were as follows: δ 0.04 (s, 18H, trimethylsilyl), 0.48 (s, 12H, dimethylsilylene), 1.10 (t, 6H, methyl), 2.59 (s, 4H, methylene), 3.38 (q, 4H, methylene), and 6.2 to 7.7 (m, 8H, Ar-H). The above-produced lithium salt was dissolved in toluene (50 milliliter) under nitrogen, and the solution was cooled down to -78°C. To the solution, a suspension of zirconium tetrachloride (1.2 g, 5.1 mmol) in toluene (20 milliliter), which had been cooled down to -78°C in advance, was added dropwise. After completion of addition, the mixture was stirred at room temperature for six hours. The solvent of the reaction mixture was removed, and the thus-obtained residue was recrystallized from dichloromethane, to thereby yield 0.9 g (1.33 mmol) of (1,2'-dimethylsilylene) (2,1'-dimethylsilylene)-bis(3-trimethylsilylmethylindenyl)zirconium dichloride (yield: 26%). The measurement results in accordance with ¹H-NMR (90 MHz, CDCl₃) were as follows: δ 0.0 (s, 18H, trimethylsilyl), 1.02, 1.12 (s, 12H, dimethylsilylene), 2.51 (dd, 4H, methylene), and 7.1 to 7.6 (m, 8H, Ar-H).

### Polymerization of propylene

To a reactor (made of stainless steel) having volume of 250 liter and equipped with a stirrer, n-heptane (37.4 L/h), triisobutylaluminum (product of Nippon Aluminum alkyls, Ltd., 19 mmol/h), methylaluminoxane (product of Albemarle, 13.6 mmol/h), and the above-obtained (1,2'-dimethylsilylene) (2,1'-dimethylsilylene)-bis(3-trimethylsilylmethylindenyl) zirconium dichloride (13.6 µmol/h) were continuously fed. Propylene and hydrogen were continuously fed to the reactor such that the ratio of hydrogen/propylene by volume in the gas phase was maintained at 0.05, and the total pressure in the reactor was maintained at 0.8 MPaG. Polymerization was continuously performed at the temperature of 60°C for a residence time of 90 minutes, thereby forming low-crystalline polypropylene.

### Post treatment

To the thus-produced polymerization solution, a phenol-type antioxidant (Irganox 1010, product of Ciba Specialty Chemicals) (500 ppm based on polymer) and a phosphorus-type antioxidant (Irgafos 108, product of Ciba Specialty Chemicals) (1,000 ppm based on polymer) were added. The mixture was subjected to melt flushing by the use of two stages of flush drums equipped with a plate-fin-type polymer heater at a jacket temperature of 220°C, thereby removing solvent.

### (2) Production of granules

After completion of flushing, the molten resin (resin temperature: 200°C) was extruded by the use of a gear pump and granulated by the use of a rotatable-drum-type submerged cutter equipped with a liquid-solid separator (Type PASC-21-HS, product of Tanabe Plastics Machinery Co., Ltd.). The time for transferring resin chips formed through cutting to the solid-liquid separator (residence time of granules in water) was predetermined by modifying the length of a connection tube connecting the submerge cutter and the solid-liquid separator. In the production of granules, the residence time of granules in water was regulated to 4 sec, and the water temperature was 20°C. Through the above procedure, low-crystalline polypropylene granules were obtained.

The low-crystalline polypropylene granules were found to have a [mmmm] of 0.45, a [rrrr] of 0.024, a [rrrr/ (1-mmmm)] of 0.044, an MFR of 7.3 g/10 minutes, and Tm of 81°C.

The Tm was determined through the following procedure.

By the use of a differential scanning colorimeter (DSC-7, product of Perkin Elmer Co., Ltd.), a sample (10 mg) was melted at 230°C for three minutes under the atmosphere of nitrogen. The melt was then cooled down to -40°C at a cooling rate of 1°C/minute, maintained at -40°C for three minutes, and heated at a temperature elevation rate of 10°C/minute, thereby obtaining an endothermic curve attributed to melting of the resin. The temperature corresponds to the maximum peak top was determined as a melting point (Tm).

### <Example 1>

### Component (B)

Soft polypropylene resin having controlled stereoregularity (low-crystalline polypropylene granules produced in Production Example 1, hereinafter abbreviated as "FPP"): 50 % by weight

### Component (C)

Propylene-ethylene random copolymer (ethylene unit content: 4 % by mole, MFR = 1.3 g/10 minutes, and Tm = 147°C; hereinafter abbreviated as "RPP"): 30 % by weight Component (D)

Hydrogenated petroleum resin (Arkon P125, product of Arakawa Chemical Industries, Ltd., softening point: 125°C; hereinafter abbreviated as "hydrogenated petroleum resin"): 20 % by weight

The mixed resin composition containing the above three component was formed to an intermediate layer (thickness 8.8 µm). EVA (vinyl acetate unit content: 15 % by weight, MFR = 2.0 g/10 minutes at 190°C under a load of 21.18 N) serving as component (A) (100 parts by weight) and diglycerin oleate ester (3.0 parts by weight) serving as an anti-clouding agent were melt kneaded to produce a composition, and two surface layers (1.6 µm) were formed from the composition. The laminated film having a total thickness of 12 µm (1.6 µm/8.8 µm/1.6 µm) was formed through co-extrusion inflation molding ct a three-layer ring die temperature of 190°C and a blow-up ratio of 6.0.

### <Example 2>

The procedure of Example 1 was repeated, except that the proportions of the three resins employed in Example 1 for producing the intermediate layer were altered to the following proportions:

| | |
|---|---|
| component (B): | 55 % by weight |
| component (C): | 35 % by weight |
| component (D): | 10 % by weight, to thereby produce a laminated film having a total thickness of 12 µm (1.6 µm/8.8 µm/1.6 µm). |

### <Comparative Example 1>

The procedure of Example 1 was repeated, except that the proportions of the three resins employed in Example 1 for producing the intermediate layer were altered to the following proportions:

| | |
|---|---|
| component (B): | 70 % by weight |
| component (C): | 30 % by weight |
| component (D): | 0 % by weight, to thereby produce a laminated film having a total thickness of 12 µm (1.6 µm/8.8 µm/1.6 µm). |

### <Comparative Example 2>

The procedure of Example 1 was repeated, except that a soft polypropylene resin having controlled stereoregularity (REX flexfpo W110, product of Huntsman Polymer Corporation, hereinafter abbreviated as "FPO," propylene unit content: 100 % by mole, [mmmm] = 0.445, [rrrr] = 0.123, a [rrrr/(1-mmmm)] = 0.222, MFR = 6 g/10 minutes, and Tm = 158°C) was used instead of component (B) employed in Example 1 for producing the intermediate layer, to thereby produce a laminated film having a total thickness of 12 µm (1.6 µm/8.8 µm/1.6 µm).

### <Comparative Example 3>

The procedure of Example 1 was repeated, except that the proportions of the three resins employed in Example 1 for producing the intermediate layer were altered to the following proportions:

| | |
|---|---|
| component (B): | 35 % by weight |
| component (C): | 30 % by weight |
| component (D): | 35 % by weight, to thereby produce a |
| | laminated film having a total thickness of 12 µm (1.6 µm/8.8 µm/1.6 µm). |

### <Comparative Example 4>

Commercial poly(vinyl chloride) stretch film (thickness: 15 µm, hereinafter abbreviated as "PVC") was similarly evaluated.

Characteristics and performance of the above film samples evaluated as described above are shown in Table 1.

**Table 1**

| Intermediate layer composition (parts by wt.) | | Example | | Comparative Example | | | |
|---|---|---|---|---|---|---|---|
| | | 1 | 2 | 1 | 2 | 3 | 4 |
| FPP | | 50 | 55 | 70 | | 35 | PVC |
| FPO | | | | | 50 | | |
| RPP | | 30 | 35 | 30 | 30 | 30 | |
| Hydrogenated petroleum resin | | 20 | 10 | | 20 | 35 | |
| Stress at 25% elongation (MPa) | M direction | 7.65 | 7.65 | 7.36 | 10.79 | 6.37 | 11.77 |
| | T direction | 5.88 | 6.08 | 5.88 | 7.36 | 4.41 | 5.88 |
| Storage modulus (E') (×10⁸Pa) | | 2.5 | 1.7 | 1.5 | 2.8 | 1.5 | 1.9 |
| Loss tangent (tan δ) (-) | | 0.33 | 0.33 0.3 | 0.12 | 0.25 | 0.3 | 0.35 |
| Feed material pellets storage stability | | AA | AA | AA | CC | AA | - |

| Wrapping machine adaptability | | | | | | | |
|---|---|---|---|---|---|---|---|
| Cut property | | AA | BB | CC | AA | AA | AA |
| Wrinkle at wrapping | | AA | AA | CC | BB | CC | BB |
| Bottom sealing property | Performance of wrapping the bottom | AA | BB | DD | BB | BB | AA |
| | Heat sealability | AA | AA | AA | AA | CC | - |
| Break resistance | | BB | AA | AA | BB | CC | AA |
| Elastic recovery (maximum indentation depth) | | BB 22 mm | BB 23 mm | BB 25 mm | CC 18 mm | CC 16 mm | AA 28 mm |
| Transparency (Haze)(%) | | AA 1.2 | AA 1.2 | AA 1.0 | BB 1.8 | AA 1.3 | AA 1.0 |
| High-temp. storage stability | | AA | AA | AA | BB | DD | - |
| Overall evaluation | | BB | BB | DD | CC | DD | BB |

**Table 2**

| Evaluated properties | | AA | BB | CC | DD |
|---|---|---|---|---|---|
| Cut property | | Being cut without problem | Unsatisfactory cut edge, but employable | Difficult to be cut, with transfer failure | Impossible to be cut |
| Wrinkle at wrapping | | No wrinkle generated under normal conditions | Wrinkles generated to slight extent, but employable | Wrinkle generation ≥30% film surface, not restored | Wrinkle generation over almost entire film surface |
| Bottom sealing property | Perform -ance of folding the bottom | Beautifully folded, no stiffness or detachment | Almost successfully folded | Wrinkle generated, nearly detached | Impossible to fold the film, causing lumps |
| | Heat sealability | Heat-sealable over wide area, no detachment | Partially melt-adhered firmly, but employable | Holes formed at higher temperature, and poor melt-adhesion at lower temperature | Impossible of melt-adhesion |
| Tear resistance | | No tearing | Occasionally tearing under high tension | Occurrence of tearing ≥10% | Occurrence of tearing ≥50% |

As is clear from Table 1, a laminated film comprising at least three layers including an intermediate layer formed of a resin layer containing a polypropylene resin having controlled stereoregularity as stipulated in the present invention, a crystalline polypropylene resin, and a petroleum resin, and two surface layers containing, as a main component, an ethylene polymer successfully provides a vinyl-chloride-free stretch film which has excellent characteristics such as wrapping efficiency, wrapping finish, elastic recovery, bottom sealing property, and transparency, as well as has high long-term film stability (Examples 1 and 2). In contrast, in Comparative Example 1 where the intermediate layer contains no petroleum resin, performance of folding the bottom, among wrapping machine adaptabilities, is poor. The film of Comparative Example 2 employs a soft polypropylene resin having controlled stereoregularity. However, when the relation between the meso pentad fraction [mmmm] and the racemic pentad [rrrr] (i.e., [rrrr/(1-mmmm)] is in excess of 0.1, storage stability of feed material pellets is insufficient, and elastic recovery of the wrap film of packaged products is unsatisfactory as compared with poly(vinyl chloride) film. The film of Comparative Example 3 contains petroleum resin in an amount (parts) in excess of the range stipulated in the present invention. In this case, the produced film exhibits poor storage stability at high temperature, and other properties such as tear resistance are insufficient.

### Industrial Applicability

According to the present invention, a chlorine-free stretch film which is excellent in storage stability of feed material pellets, wrapping efficiency, wrapping finish, elastic recovery, bottom sealing property, transparency and has favorable long-term stability and economic merits can be provided.

## Claims

1. A laminated film for stretch wrapping comprising at least three layers, **characterized in that** the laminated film has both surface layers comprising, as a main component, component (A) which is an ethylene polymer, and has at least one intermediate layer formed of a mixed resin layer comprising, as a main component, a resin composition containing the following component (B) in an amount of 30 to 75 % by weight:
a polypropylene resin having controlled stereoregularity satisfying the following requirements (1) and (2):
(1) a meso pentad fraction [mmmm] as determined from a ¹³C-NMR spectrum is 0.2 to 0.7, and
(2) a racemic pentad fraction [rrrr] and (1-mmmm) satisfy the following relation:
[rrrr/(1-mmmm)]≤0.1;
the following component (C) in an amount of 20 to 60 % by weight:
a crystalline polypropylene resin having a crystal melting peak temperature of 120°C or higher; and
the following component (D) in an amount of 5 to 30 % by weight:
at least one resin selected from among petroleum resin, terpene resin, coumarone-indene resin, rosin resin, and hydrogenated derivatives thereof.

2. The laminated film for stretch wrapping as described in claim 1, wherein the ethylene polymer serving as component (A) is at least one ethylene polymer selected from among low-density polyethylene, linear low-density polyethylene, linear ultra-low-density polyethylene, ethylene-vinyl acetate copolymer, ethylene-acrylate ester copolymer, and ethylene-methacrylate ester copolymer.

3. The laminated film for stretch wrapping as described in claim 2, wherein the ethylene polymer serving as component (A) is an ethylene-vinyl acetate copolymer which has a vinyl acetate unit content of 5 to 25 % by weight and a melt flow rate (JIS K 7210, 190°C, under a load of 21.18 N) of 0.2 to 10 g/10 minutes.

4. The laminated film for stretch wrapping as described in any one of claims 1 to 3, wherein the crystalline polypropylene resin serving as component (C) is at least one crystalline polypropylene resin selected from among propylene-ethylene random copolymer, propylene-ethylene-butene-1 copolymer, and reactor-type polypropylene elastomer.

5. The laminated film for stretch wrapping as described in any one of claims 1 to 3, wherein the resin serving as component (D) is a petroleum resin having a softening point of 100 to 150°C and/or a hydrogenated derivative thereof, and the resin is incorporated in an amount of 10 to 20 % by weight into the resin composition for forming the mixed resin layer.

6. The laminated film for stretch wrapping as described in any one of claims 1 to 3, which has a storage modulus (E') of 5.0 x 10⁷ Pa to 5.0 x 10⁸ Pa as determined through dynamic viscoelasticity measurement with the frequency of 10 Hz and at the temperature of 20°C, and which has a loss tangent (tanδ) within the range of 0.2 to 0.8.

## Patentansprüche

1. Laminierter Film für Streckfollen, umfassend mindestens drei Schichten, dadurch charakterisiert, dass der laminierte Film beide Oberflächenschichten, die als Hauptkomponente Komponente (A) umfassen, welche ein Ethylenpolymer ist, und mindestens eine Zwischenschicht aufweist, die aus einer Mischharzschicht gebildet ist, welche als Hauptkomponente eine Harzzusammensetzung umfasst, die enthält:
die folgende Komponente (B) in einer Menge von 30 bis 75 Ges.-%:
ein Polypropylenharz mit kontrollierter Stereoregularität, das die folgenden Bedingungen (1) und (2) erfüllt:
(1) die meso Pentade-Fraktion [mmmm], bestimmt aus einem ¹³C-NMR Spektrum, beträgt. 0.2 bis 0,7 und
(2) die racemische-Pentade-Fraktion [rrrr] und (1-mmmm) erfüllen die folgende Bedingung:
[rrrr/(1-mmmm)]≤0,1:
die folgende Komponente (C) in einer Menge von 20 bis 60 Gew.-%:
ein kristallines Polypropylenharz mit einer Kristallschmelzpiektemperatur von 120°C oder höher; und
die folgende Komponente (D) in einer Menge von 5 bis 30 Gew.-%: mindestens ein Harz, ausgewählt aus Petroleumharz, Terpenharz, Cumaron-Inden-Harz, Rosinharz und hydrierten Derivaten davon,

2. Laminierter Film für Streckfolien wie in Anspruch 1 beschrieben, wobei das als Komponente auf (A) dienende Ethylenpolymer mindestens ein Ethylenpolymer ist, das ausgewählt wird aus Polyethylen niedriger Dichte, linearem Polyethylen niedriger Dichte, linearem Polyethylen ultraniedriger Dichte, Ethylen-Vinylacetat-Copolymer, Ethylen-Acrylatester-Copolymer und Ethylen-Methacrylatester-Copolymer.

3. Laminierter Film für Streckfolien wie in Anspruch 2 beschrieben, wobei das als Komponente (A) dienende Ethylenpolymer ein Ethylen-Vinylacetat-Copolymer ist, welches einen Vinylacetateinheitengehalt von 5 bis 25 Gew,-% und eine Schmelzflussrate (JIS K 7210, 190°C, unter einer Last von 21,18 N) von 0,2 bis 10 g/10 Minuten aufweist.

4. Laminierter Film für Streckfollen wie in einem der Ansprüche 1 bis 3 beschrieben, wobei das als Komponente (C) dienende kristalline Polypropylenharz mindestens ein kristallines Polypropylenharz ist, das ausgewählt wird aus statistischem Propylen-Ethylen-Copolymer. Propylen-Ethylen-Buten-1-Copolymer, und Polypropylen-Elastomer vom Reaktortyp.

5. Laminierter Film für Streckfolien wie in einem der Ansprüche 1 bis 3 beschrieben, wobei das als Komponente (D) dienende Harz sein Petroleum-Harz mit einem Erweichungspunkt von 100 bis 150°C und/oder ein hydriertes Derivat davon ist, und das Harz in einer Menge von 10 bis 20 Gew.-% in die Harzzusammensetzung zur Herstellung der Mischharzschicht eingearbeitet wird.

6. Laminierter Film für Streckfolien wie in einem der Ansprüche 1 bis 3 beschrieben, welcher ein Speichermodul (E') von 5,0 x 10⁷ Pa bis 5,0 x 10⁸ Pa aufweist, bestimmt durch dynamische Viskoelastizitätsmessung mit einer Frequenz von 10 Hz und bei einer Temperatur von 20°C, und welcher eine Verlusttangente (tanδ) in einem Bereich von 0,2 bis 0,8 aufweist.

## Revendications

1. Film stratifié pour l'emballage par étirage comprenant au moins trois couches **caractérisé en ce que** le film stratifié a les deux couches de surface comprenant, en tant qu'un principal, un composant (A), qui est un polymère d'éthyléne et a au moins une couche intermédiaire formée d'une couche d'une résine de mélange comprenant, en tant qu'un composant principal, une composition de résine contenant le composant (B) suivant en une quantité de 30 à 75 % en poids :
une résine de polypropylène ayant une stéréorégularité contrôlée satisfaisant aux exigences (1) et (2) suivantes :
(1) une fraction méso en pentad [mmmm] comme déterminée par un spectre de RMN -¹³C est de 0,2 à 0,7 et
(2) une fraction racémique en pentad [rrrr] et (1-mmmm) satisfait la relation suivante :
[rrrr/(1-mmmm)]≤0,1 ;
le composant (C) suivant en une quantité de 20 à 60 % en poids :
une résine de polypropylène cristalline ayant une température de pic de fusion des cristaux égale ou supérieure à 120 °C : et
le composant (D) suivant en une quantité de 5 à 30 % en poids :
au moins une résine sélectionnée parmi une résine de pétrole, une résine de terpène, une résine de coumarone-indène, une résine de colophane et des dérivés hydrogénés de ceux-ci.

2. Film stratifié pour l'emballage par étirage selon la revendication 1, dans lequel le polymère d'éthylène servant de composant (A) est au moins un polymère d'éthylène sélectionné parmi du polyéthylène à basse densité, du polyéthylène linéaire à basse densité, du polyéthylène linéaire à ultra-basse densité, du copolymére d'éthylène-acétate de vinyle, du copolymère d'éthylène-ester d'acrylate et du copolymère d'éthylène-ester de méthacrylate.

3. Film stratifié pour l'emballage par étirage selon la revendication 2, dans lequel le polymère d'éthylène servant de composant (A) est un copolymère d'éthylène-acétate de vinyle, qui a une teneur de l'unité d'acétate de vinyle de 5 à 25 % en poids et une vitesse d'écoulement en masse fondue (JIS K 7210, 190 °C. sous une charge de 21,18 N) de 0,2 à 10 g/10 minutes,

4. Film stratifié pour l'emballage par étirage selon l'une des revendications 1 à 3, dans lequel la résine de polypropylène cristalline servant de composant (C) est au moins une résine de polypropylène cristalline sélectionnée parmi un copolymère statistique de propylène-éthylène, une copolymère de propyléne-éthylène-butène-1 et un élastomère de polypropylène du type de réacteur,

5. Film stratifié pour l'emballage par étirage selon l'une des revendications 1 à 3, dans lequel la résine servant de composant (D) est une résine de pétrole ayant un point de ramollissement de 100 à 150 °C et/ou un dérivé hydrogéné de celle-ci et la résine est incorporée en une quantité de 10 à 20 % en poids dans la composition de résine pour former la couche de la résine de mélange.

6. Film stratifié pour l'emballage par étirage selon l'une des revendications 1 à 3, qui a un module de stockage (E') de 5,0 x 10⁷ Pa à 5,0 x 10⁸ Pa comme déterminé par une mesure de la viscoélasticité dynamique à une fréquence de 10 Hz et à une température de 20 °C et qui a une tangente de perte (tanδ) dans la gamme de 0,2 à 0,8.
